# FASCICULE DE BREVET EUROPEEN

(11) **EP 0 780 251 B1**
(45) Date de publication et mention de la délivrance du brevet: **24.01.2001**
(21) Numéro de dépôt: 96120058.1
(22) Date de dépôt: 13.12.1996
(51) Int. Cl.: B60H 1/00

(54) **Dispositif de chauffage, ventilation et/ou climatisation, notamment pour véhicule automobile**
Vorrichtung für die Heizung, Lüftung und/oder Klimatisierung, insbesondere für Kraftwagen
Heating, ventilating and/or air conditioning device, especially for motor vehicles

(30) Priorité: 22.12.1995 FR 9515427
(43) Date de publication de la demande: 25.06.1997
(73) Titulaire: VALEO CLIMATISATION, 78321 La Verrière (FR)
(72) Inventeur: Pommier, Didier, 28130 Maintenon (FR); Elliot, Gilles, 91080 Courcouronnes (FR)

(56) Documents cités:
- EP-A- 0 212 306
- EP-A- 0 289 405
- DE-A- 3 010 329
- FR-A- 2 247 680

## Description

L'invention concerne un dispositif de chauffage et/ou climatisation, notamment pour véhicule automobile, et plus particulièrement un boîtier de chauffage et distribution d'air d'un tel dispositif.

On connaît de tels boîtiers qui logent un échangeur de chaleur et sont munis , d'une part, d'une entrée alimentée en air par un groupe motoventilateur du dispositif, et d'autre part, de sorties pieds et aération à accès contrôlés respectivement par un premier volet et un second volet.

Dans les boîtiers de ce type, les volets ont habituellement un rôle unique servant ainsi, soit au mélange d 'air en vue du réglage de sa température, soit à la distribution d'air traité ou recirculé. Il est par conséquent nécessaire de prévoir de nombreux conduits d'acheminement d'air et une pluralité de chambres de traitement d'air.

Ce type d'architecture de boîtier entraîne des pertes de charge importantes et requiert un volume souvent incompatible avec l'agencement des véhicules actuels.

Par ailleurs, il est connu, notamment par le document EP 0 289 405, un appareil de chauffage et de ventilation comprenant deux parties séparées destinées à assurer le chauffage et la ventilation de deux zones de l'habitacle d'un véhicule. Chaque partie de l'appareil comporte deux volets de mixage, une zone de mixage et un volet de distribution entre une sortie aération et une sortie pied/dégivrage. Cet appareil comporte dans chacune de ces parties une unique zone de mixage. Il ne permet pas de réguler des températures différentes entre les conduits pied/dégivrage et le conduit aération. Or, il est un problème constant dans le domaine de la climatisation automobile de construire de appareil compact permettant d'envoyer de l'air plus frais au niveau du visage et du corps du passager et de l'air plus chaud au niveau des pieds du passager et du dégivrage. La présente invention permet au passager de choisir des températures différentes au niveau de l'aération et au niveau des pieds et du dégivrage.

Le document FR 2 247 680 montre un autre dispositif de chauffage, qui correspond au préambule de la première revendication.

En conséquence, un but de l'invention est de procurer un dispositif de chauffage, ventilation et/ou climatisation qui ne présente pas les inconvénients des dispositifs de la technique antérieure , aussi bien du rendement et de l'encombrement que du confort des passagers

L'invention propose à cet effet un dispositif du type décrit dans la revendication 1. Dans ce dispositif lequel le boîtier est divisé en trois conduits. Un premier conduit présente une extrémité amont débouchant au niveau de l'entrée du boîtier et une extrémité aval communiquant, de façon contrôlée par le premier volet qu'il loge, avec la sortie pieds. Un second conduit présente une extrémité amont débouchant au niveau de l'entrée du boîtier et une extrémité aval communiquant, de façon contrôlée par le second volet qu'il loge, avec la sortie aération. Un troisième conduit loge l'échangeur de chaleur dans une zone centrale, et présente en amont de cet échangeur de chaleur une extrémité amont communiquant de façon contrôlée par un troisième volet avec l'entrée du boîtier et en aval de l'échangeur de chaleur deux extrémités aval dites "pieds" et "aération" communiquant de façon contrôlée par les premier et second volets, respectivement, avec les sorties pieds et aération du boîtier. Le dispositif comprend également des moyens de commande propres à agir sélectivement sur les volets pour les amener dans des positions choisies.

De la sorte, on réduit sensiblement le nombre de conduits et de chambre, permettant ainsi une réduction importante du volume du boîtier et des pertes de charge.

De plus, les premier et second volets assurent une double fonction de réglage de température et de distribution d'air.

Ci-dessus, le sens amont-aval est celui qui est traditionnellement utilisé en référence à l'échangeur de chaleur. On entend donc par amont une position située avant l'échangeur et par aval une position située après celui-ci.

Selon une autre caractéristique de l'invention, le dispositif comprend, entre l'échangeur de chaleur et les deux extrémités aval pieds et aération du troisième conduit, un quatrième volet destiné à régler sur ordre des moyens de commande la proportion d'air chaud issu de l'échangeur à répartir entre les sorties pieds et aération.

Tous ces volets sont préférentiellement pivotants, et au moins les premier, second et quatrième d'entre eux sont aptes à prendre une multiplicité de positions différentes.

De façon particulièrement avantageuse, le troisième conduit est disposé entre les premier et second conduits et les flux d'air qui circulent dans des parties centrales des trois conduits sont sensiblement parallèles, ce qui permet de réduire les dimensions de ceux-ci, et par conséquent de réduire encore plus les pertes de charge.

Préférentiellement, l'extrémité amont du troisième conduit présente une forme générale tronconique qui permet de favoriser la répartition de l'air sur l'ensemble de la face avant de l'échangeur.

Selon encore une autre caractéristique de l'invention, les extrémités aval pieds et aération du troisième conduit sont disposées sensiblement perpendiculairement par rapport à l'extrémité amont de ce troisième conduit. Cette disposition permet de réduire encore l'encombrement du boîtier.

Dans la description qui suit, faite à titre d'exemple, on se réfère aux dessins annexés, sur lesquels :
- la figure 1 est un schéma illustrant, en coupe transversale, une partie du dispositif de chauffage et/ou climatisation selon l'invention dans un premier mode de fonctionnement;
- la figure 2 illustre une partie du dispositif de la figure 1 dans un second mode de fonctionnement;
- la figure 3 illustre une partie du dispositif de la figure 1 dans un troisième mode de fonctionnement;
- la figure 4 illustre une partie du dispositif de la figure 1 dans un quatrième mode de fonctionnement;
- la figure 5 illustre une partie du dispositif de la figure 1 dans un cinquième mode de fonctionnement;
- la figure 6 illustre une partie du dispositif de la figure 1 dans un sixième mode de fonctionnement; et
- la figure 7 illustre une partie du dispositif de la figure 1 dans un septième mode de fonctionnement.

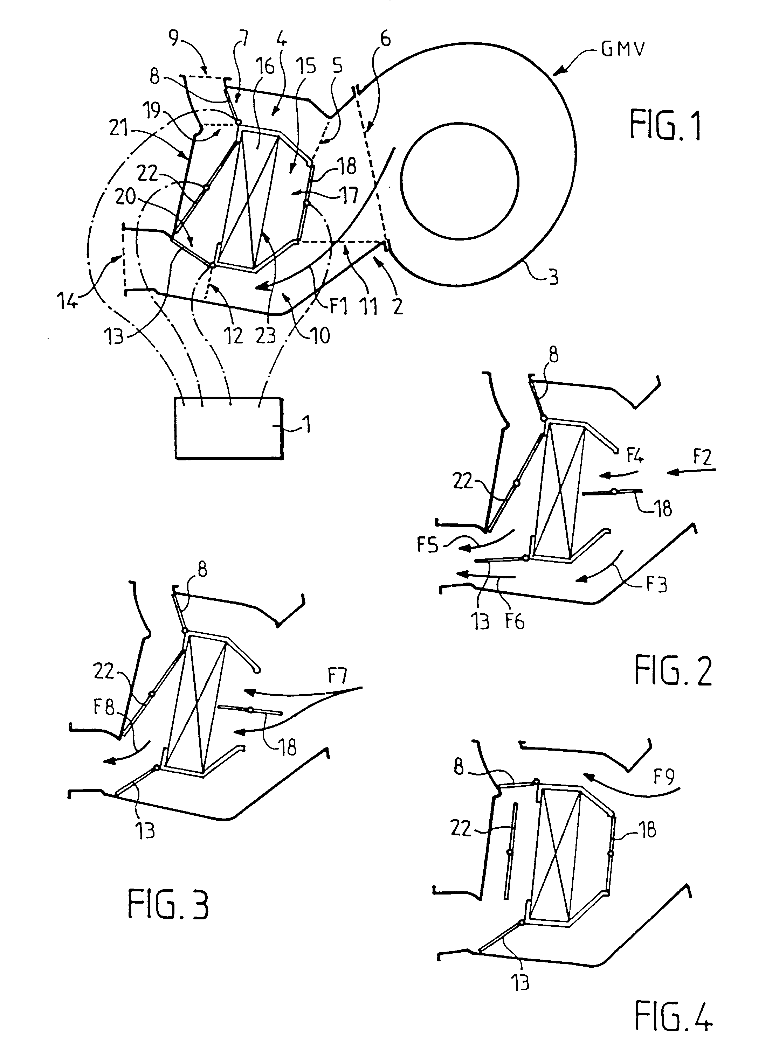

On se réfère tout d'abord à la figure 1 pour décrire un dispositif de chauffage et ventilation selon l'invention, dans un mode de réalisation préféré.

Un tel dispositif comporte, d'une première part, des moyens de commande 1 logés sous la planche de bord du véhicule et comprenant des moyens (non représentés) de saisie des paramètres aérothermiques de l'habitacle du véhicule, logés sur la façade de la planche de bord, d'une seconde part, un boîtier de chauffage et distribution d'air 2, et d'une troisième part, un groupe motoventilateur GMV comprenant un pulseur 3 destiné à alimenter en air extérieur ou recirculé le boîtier.

Les architectures classiques des boîtiers actuels n'étant pas toujours appropriées aux véhicules modernes, l'invention vient proposer une nouvelle architecture dans laquelle le boîtier est divisé en trois parties formant chacune conduit.

Ces conduits sont préférentiellement superposés les uns sur les autres de sorte que les flux d'air qu'ils canalisent respectivement soient, au moins dans leur partie centrale, parallèles.

Un premier conduit 4 est prévu dans la partie supérieure du boîtier 2. Il comporte une extrémité amont 5 débouchant au niveau d'une entrée d'air 6 du boîtier 2 et une extrémité aval 7 qui communique, de façon contrôlée par un premier volet 8, préférentiellement pivotant, qu'il loge en sa partie terminale, avec une sortie pieds 9 réalisée dans la partie supérieure de la paroi du boîtier 2. Cette sortie est destinée à alimenter en air traité ou non les bouches d'aération placées au niveau des pieds des passagers avant et arrière. Elle est éventuellement divisée au niveau de sa sortie en deux parties, l'une alimentant les bouches d'aération pieds et l'autre alimentant des bouches de dégivrage.

Ce conduit est destiné à l'acheminement d'une partie au moins de l'air non traité issu du pulseur, air que l'on appellera désormais air froid, en amont de la sortie pieds 9.

Un second conduit 10 est prévu dans la partie inférieure du boîtier 2. Il comporte une extrémité amont 11 débouchant au niveau de l'entrée d'air 6 du boîtier 2 et une extrémité aval 12 qui communique, de façon contrôlée par un second volet 13, préférentiellement pivotant, qu'il loge en sa partie terminale, avec une sortie aération 14 réalisée dans la partie inférieure arrière de la paroi du boîtier 2. Ce conduit est destiné à l'acheminement d'une partie au moins de l'air froid en amont de la sortie aération 14. Cette sortie 14 est destinée à alimenter en air traité ou non les bouches d'aération placées notamment au niveau du tableau de bord du véhicule.

Un troisième conduit 15 est prévu dans la partie centrale du boîtier 2 entre les premier 4 et second 10 conduits. Il loge un échangeur de chaleur 16 dans une zone centrale et présente en amont de cet échangeur de chaleur une extrémité amont 17 communiquant, de façon contrôlée par un troisième volet 18, avec l'entrée d'air 6 du boîtier 2 et, en aval de l'échangeur de chaleur 16, deux extrémités aval dites "pieds" 19 et "aération" 20 qui communiquent, de façon contrôlée par les premier 8 et second 13 volets, respectivement, avec les sorties pieds 9 et aération 14.

Préférentiellement, l'extrémité aval 7 du premier conduit 4 et l'extrémité aval pieds 19 du troisième conduit 15 sont disposées sensiblement perpendiculairement l'une de l'autre de sorte que le premier volet 8 puisse aisément gérer leurs ouvertures respectives par simple rotation. De même, l'extrémité aval 12 du second conduit 10 et l'extrémité aval aération 20 du troisième conduit 15 sont disposées sensiblement perpendiculairement l'une de l'autre de sorte que le second volet 13 puisse aisément gérer leurs ouvertures respectives par simple rotation.

Ces deux sorties sont donc réalisées sur les parties latérales supérieure et inférieure du troisième conduits, et leur orientation est sensiblement perpendiculaire à celle de l'extrémité amont 17 de leur troisième conduit 15. La paroi arrière 21 du boîtier 2 est ainsi en regard de l'extrémité amont 17, ce qui obligera l'air traité à se diriger vers l'une des deux extrémités aval pieds 19 et aération 20.

Pour ce faire, on prévoit un quatrième volet 22 (préférentiellement à rotation) en aval de l'échangeur de chaleur et en amont des extrémités aval pieds 19 et airation 20. Ce volet 22, destiné à régler la proportion d'air chaud issu de l'échangeur à répartir entre les sorties pieds 9 et aération 14, présente un axe de rotation placé en son milieu, lequel axe est sensiblement centré dans le conduit, et des dimensions sensiblement égales à celle du conduit en sortie de l'échangeur de chaleur 16.

Par ailleurs, la partie du troisième conduit 15, qui est en amont de l'échangeur de chaleur 16, présente, préférentiellement, une forme tronconique permettant ainsi une meilleure répartition de l'air froid sur l'ensemble de la face amont 23 de cet échangeur 16.

Tous les volets sont connectés aux moyens de commande 1 en vue de leurs positionnements combinés sur lesquels on reviendra plus loin.

On décrit maintenant les principales positions prises par les volets.

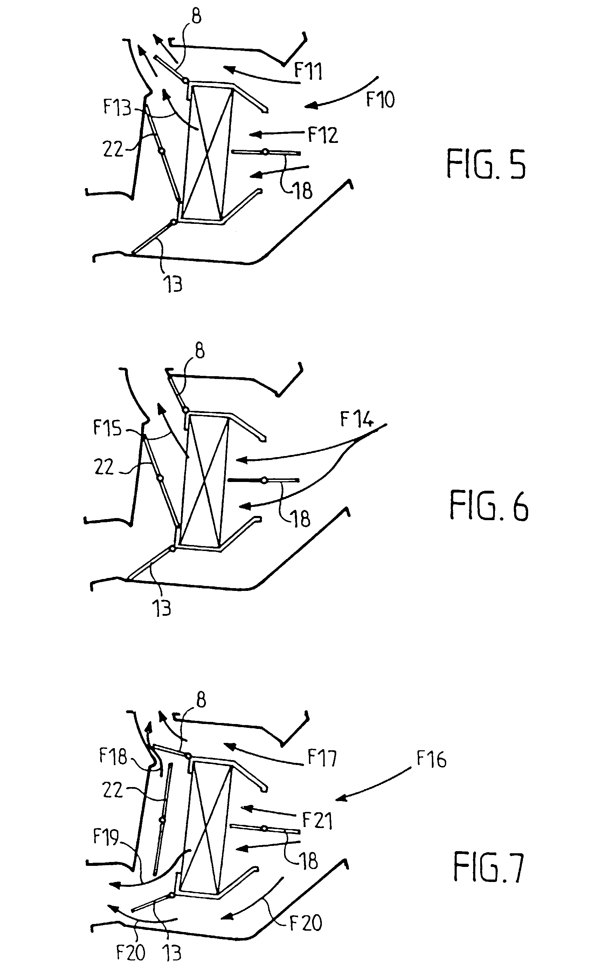

Le premier volet 8 peut prendre une multiplicité de positions dont au moins les quatre suivantes :
- une position "fermée" (voir figure 1) dans laquelle il interdit l'écoulement d'air froid vers la sortie pieds 9, tout en autorisant l'écoulement d'air chaud issu de l'échangeur de chaleur 16 vers cette sortie pieds 9;
- une position "ouverte" (voir figure 4) dans laquelle il interdit l'écoulement d'air chaud vers la sortie pieds 9, tout en autorisant l'écoulement d'air froid vers cette sortie pieds 9;
- une position "intermédiaire centrale" (voir figure 5) dans laquelle il obstrue sensiblement la moitié de l'extrémité aval 7 du premier conduit 4 et la moitié de l'extrémité aval pieds 19 du troisième conduit 15, autorisant ainsi l'évacuation d'un mélange d'air chaud et d'air froid de type 50% / 50% (ou air mitigé) vers la sortie pieds 9; et
- une position dite "intermédiaire un quart" (voir figure 7) dans laquelle il obstrue sensiblement un quart de l'extrémité aval du premier conduit et trois-quart de l'extrémité aval pieds 19 du troisième conduit 15, autorisant ainsi l'évacuation d'un mélange d'air chaud et d'air froid (ou air "mitigé chaud"), de type 75% / 25%, vers la sortie pieds 9.

Le second volet 13 peut prendre une multiplicité de positions dont au moins les trois suivantes :
- une position "fermée" (voir figure 3) dans laquelle il interdit l'écoulement d'air froid vers la sortie aération 14, tout en autorisant l'écoulement d'air chaud issu de l'échangeur de chaleur 16 vers cette sortie aération 14;
- une position "ouverte" (voir figure 1) dans laquelle il interdit l'écoulement d'air chaud vers la sortie aération 14, tout en autorisant l'écoulement d'air froid vers cette sortie aération 14;
- une position "intermédiaire centrale" (voir figure 2) dans laquelle il obstrue sensiblement la moitié de l'extrémité aval 12 du second conduit 10 et la moitié de l'extrémité aval aération 20 du troisième conduit 15, autorisant ainsi l'évacuation d'un mélange d'air chaud et d'air froid de type 50% / 50% (ou air mitigé) vers la sortie aération 14; et
- une position dite "intermédiaire trois-quart" (voir figure 7) dans laquelle il obstrue sensiblement trois-quart de l'extrémité aval 12 du second conduit 10 et un quart de l'extrémité aval aération 20 du troisième conduit 15, autorisant ainsi l'évacuation d'un mélange d'air chaud et d'air froid (ou air "mitigé froid"), de type 25% / 75%, vers la sortie aération 14.

Bien entendu, selon les options, on peut envisager une multiplicité de positions intermédiaires, autres que celles dites centrale, un quart, ou trois-quart pour les premier et second volets. De telles positions permettraient des proportions non égales variant entre 1% et 99% pour les ouvertures des extrémités aval qu'ils contrôlent respectivement.

Le quatrième volet 22 peut prendre une multiplicité de positions dont au moins les trois suivantes :
- une position dite "droite" (voir figure 5) dans laquelle il force l'évacuation, par son extrémité aval pieds 19, de l'intégralité de l'air chaud issu de l'échangeur de chaleur 16 vers la sortie pieds 9;
- une position dite "gauche" (voir figure 1) dans laquelle il force l'évacuation, par son extrémité aval aération 20, de l'intégralité de l'air chaud issu de l'échangeur de chaleur 16 vers la sortie aération 14; et
- une position "intermédiaire centrale" (voir figure 7) dans laquelle il autorise une distribution sensiblement égale de l'air chaud issu de l'échangeur de chaleur 16, de type 50% / 50%, respectivement vers les sorties aval pieds 19 et aération 20.

Bien entendu, selon les options, on peut envisager une multiplicité de positions intermédiaires, autres que celle dite centrale, pour le quatrième volet. De telles positions permettraient des proportions non égales variant entre 1% et 99% pour les ouvertures des extrémités aval qu'ils contrôlent respectivement.

Le troisième volet 18 peut prendre au moins l'une de deux positions parmi une position "fermée" (voir figure 1) et une position "ouverte" (voir figure 2) dans lesquelles il interdit ou autorise l'accès de l'air froid à l'échangeur de chaleur 16, respectivement.

Bien entendu, on peut envisager que le troisième volet prenne des positions intermédiaires.

Dans l'exemple illustré sur la figure 1, le dispositif est dans un mode de fonctionnement dit "aération froid" dans lequel le premier volet 8 est en position fermée, le second volet 13 est en position ouverte, et le troisième volet 18 est en position fermée. La position du quatrième volet 22 est quelconque, par exemple gauche, puisque de par la position du troisième volet 18, il influence ni le traitement de l'air, ni sa distribution.

Dans ce mode de fonctionnement, l'air issu du pulseur 3 (flèche F1) ne peut donc pénétrer que dans le second conduit 10 où il est canalisé vers la sortie aération 14 du boîtier en raison de la position ouverte du second volet 13.

On se réfère maintenant aux figures 2 à 7 pour décrire d'autres modes de fonctionnement du dispositif selon l'invention.

Le dispositif peut fonctionner dans un mode dit "aération mitigé" illustré figure 2. Pour ce faire, on place le premier volet 8 en position fermée, le second volet 13 en position intermédiaire centrale, le troisième volet 18 en position ouverte, et le quatrième volet 22 en position gauche.

L'air issu du pulseur 3 (flèche F2) ne peut donc pénétrer que dans les second 10 (flèche F3) et troisième 18 (flèche F4) conduits. La portion d'air qui pénètre dans le troisième conduit 15 est réchauffée lors de la traversée de l'échangeur de chaleur 16, puis forcée par le quatrième volet 22 à se diriger vers l'extrémité aval aération 20 (flèche F5) qui est partiellement ouverte en raison de la position intermédiaire du second volet 13. Cet air chaud est ensuite mélangé à l'air froid issu du second conduit 10 (flèche F6), puis l'air ainsi mélangé sort du boîtier 2 par sa sortie aération 14.

Le dispositif peut également fonctionner dans un mode dit "aération chaud" illustré figure 3. Pour ce faire, on place les premier 8 et second 13 volets en position fermée, le troisième volet 18 en position ouverte, et le quatrième volet 22 en position gauche.

L'air issu du pulseur 3 ne peut donc pénétrer que dans le troisième conduit 15 (flèche F7) où il est réchauffé lors de la traversée de l'échangeur de chaleur. Puis cet air chaud est forcé par le quatrième volet 22 à se diriger (flèche F8) vers l'extrémité aval aération 20 qui est totalement ouverte en raison de la position fermée du second volet 13. Finalement, il sort du boîtier 2 par sa sortie aération 14.

Le dispositif peut également fonctionner dans un mode dit "pieds froid" illustré figure 4. Pour ce faire, on place le premier volet 8 en position ouverte et les second 13 et troisième 18 volets en position fermée. La position du quatrième volet 22 est quelconque, par exemple intermédiaire centrale.

L'air issu du pulseur 3 ne peut donc pénétrer (flèche F9) que dans le premier conduit 4 où il est canalisé vers la sortie pieds 9 du boîtier 2 en raison de la position ouverte du premier volet 8.

Le dispositif peut également fonctionner dans un mode dit "pieds mitigé" illustré figure 5. Pour ce faire, on place le premier volet 8 en position intermédiaire, le second volet 13 en position fermée, le troisième volet 18 en position ouverte, et le quatrième volet 22 en position droite.

L'air issu du pulseur 3 (flèche F10) ne peut donc pénétrer que dans les premier 4 (flèche F11) et troisième 15 (flèche F12) conduits. La portion d'air qui pénètre dans le troisième conduit 15 est réchauffée lors de la traversée de l'échangeur de chaleur 16, puis forcée par le quatrième volet 22 à se diriger (flèche F13) vers l'extrémité aval pieds 19 qui est partiellement ouverte en raison de la position intermédiaire centrale du premier volet 8. Cet air chaud est ensuite mélangé à l'air froid issu du premier conduit, puis l'air ainsi mélangé sort du boîtier 2 par sa sortie pieds 9.

Le dispositif peut également fonctionner dans un mode dit "pieds chaud" illustré figure 6. Pour ce faire, on place les premier 8 et second 13 volet en position fermée, le troisième 18 volet en position ouverte, et le quatrième volet 22 en position droite.

L'air issu du pulseur 3 ne peut donc pénétrer (flèche F14) que dans le troisième conduit 15 où il est réchauffé lors de la traversée de l'échangeur de chaleur 16. Puis cet air chaud est forcé par le quatrième volet 22 à se diriger (flèche F15) vers l'extrémité aval pieds 19 qui est totalement ouverte en raison de la position fermée du premier volet 8. Finalement, il sort du boîtier 2 par sa sortie pieds 9.

Le dispositif peut également fonctionner dans un mode dit "bilevel" (ou à stratification de température) illustré figure 7. Pour ce faire, on place les premier 8 et second 13 volets dans des positions respectives intermédiaires différentes, le troisième volet 18 en position ouverte, et le quatrième volet 22 en position centrale. Par exemple, le premier volet 8 est en position intermédiaire un quart et le second volet 13 est en position intermédiaire trois quart.

L'air issu du pulseur 3 (flèche F16) pénètre dans les trois conduits 4, 10 et 15 à la fois. Une première portion d'air froid (flèche F17) est canalisée vers la sortie pieds 9, une seconde portion d'air froid (flèche F20) est canalisée vers la sortie aération 14, et une troisième portion d'air froid (flèche F21) pénètre dans le troisième conduit 15, est réchauffée lors de la traversée de l'échangeur de chaleur 16, puis forcée par le quatrième volet 22 à se diriger pour une partie (flèche F18) vers l'extrémité aval pieds 20 qui est partiellement ouverte en raison de la position intermédiaire du premier volet 8 et pour une autre partie (flèche F19), sensiblement égale à la première (mais cela n'est pas obligatoire) vers l'extrémité aval aération 20 qui est ouverte au quart en raison de la position intermédiaire au trois quart ouverte du second volet 13. La première partie d'air chaud est ensuite mélangée à l'air froid issu du premier conduit 4 pour former de l'air mitigé chaud qui sort du boîtier 2 par sa sortie pieds 9, tandis que la seconde partie d'air chaud est ensuite mélangée à l'air froid issu du second conduit pour former de l'air tiède (ou mitigé froid) qui sort du boîtier par sa sortie aération.

On réalise ainsi un gradient de température entre la sortie pieds 9 (la plus chaude) et la sortie aération 14. Il est clair que selon les positionnements intermédiaires des premier 8 et second 13 volet, ce gradient de température peut être modifié à volonté.

Bien entendu, de très nombreux autres modes de fonctionnement peuvent être envisagés, lesquels sont en général des variantes de ceux qui viennent d'être décrits, et par conséquent n'en diffèrent que par des combinaisons des positions respectives des quatre volets.

Ainsi, on peut envisager des modes dans lesquels l'air qui alimente les sorties pieds et aération est à la même température, froide, chaude, ou bien mitigée.

Dans le cas chaud, on place les premier et second volets en position fermée, le troisième volet en position ouverte, et le quatrième volet en position centrale.

Dans le cas froid, on place les premier et second volets en position ouverte, le troisième volet en position fermée, et le quatrième volet dans une position quelconque, par exemple centrale.

Dans le cas mitigé (mi-froid mi-chaud), on place les premier et second volets en position intermédiaire centrale, le troisième volet en position ouverte, et le quatrième volet en position centrale.

On a décrit ci-avant un dispositif de chauffage et ventilation, mais il est clair que l'invention s'applique tout aussi bien à un dispositif de chauffage, ventilation et climatisation.

De même, l'invention proposée s'applique à d'autres agencements des conduits que celui qui vient d'être décrit pourvu que ces agencements demeurent dans le cadre des revendications ci-après.

## Revendications

1. Dispositif de chauffage, ventilation et/ou climatisation, notamment pour véhicule automobile, du type comprenant un boîtier (2) logeant un échangeur de chaleur (16) et muni d'une entrée (6) alimentée en air par un groupe motoventilateur, ledit boîtier (2) comporte des sorties pieds (9) et des sorties aération (14) à accès contrôlés respectivement par un premier volet (8) et un second volet (13), ledit boîtier (2) est divisé en trois conduits, caractérisé par un premier conduit (4) présentant une extrémité amont (5) débouchant au niveau de l'entrée (6) dudit boîtier (2) et une extrémité aval (7) communiquant, de façon contrôlée par le premier volet (8) qu'il loge, avec la sortie pieds (9), un second conduit (10) présentant une extrémité amont (11) débouchant au niveau de l'entrée (6) dudit boîtier (2) et une extrémité aval (12) communiquant de façon contrôlée par le second volet (13) qu'il loge avec la sortie aération (14), et un troisième conduit (15) logeant l'échangeur de chaleur (16) dans une zone centrale et présentant, d'une part, en amont dudit échangeur de chaleur une extrémité amont (17) communiquant, de façon contrôlée par un troisième volet (18), avec l'entrée (6) dudit boîtier (2), et d'autre part, en aval dudit échangeur de chaleur (16), une extrémité aval dite «pieds» (19) contrôlé par le premier volet (8) communiquant exclusivement avec les sorties pieds (9) ainsi qu'une extrémité aval dite «aération» contrôlé par le second volet (13) et communiquant exclusivement avec les sorties « aération» ; et des moyens de commande (1) propres à agir sélectivement sur les volets (8,13,18,22) pour les amener dans des positions choisies.

2. Dispositif selon la revendication 1, caractérisé en ce qu'il comprend, entre l'échangeur de chaleur (16) et les deux extrémités aval pieds (19) et aval aération (20) du troisième conduit (15), un quatrième volet (22) destiné à régler sur ordre des moyens de commande (1) la proportion d'air chaud issu de l'échangeur de chaleur (16) à répartir entre les sorties pieds (9) et aération (14).

3. Dispositif selon l'une des revendications 1 et 2, caractérisé en ce que il comporte au moins une bouche de dégivrage et en ce que au moins une sortie pieds (9) est divisée en deux parties, l'une alimentant les bouches d'aération pieds et l'autre alimentant des bouches de dégivrage .

4. Dispositif selon la revendication 3, caractérisé en ce que l'extrémité amont (17) du troisième conduit (15) présente une forme générale tronconique pour favoriser la répartition de l'air issu du groupe motoventilateur (GMV) sur l'ensemble de la face avant (23) de l'échangeur de chaleur (16).

5. Dispositif selon l'une des revendications 3 et 4, caractérisé en ce que les extrémités aval pieds (19) et aération (20) du troisième conduit (15) sont chacune disposées sensiblement perpendiculairement par rapport à l'extrémité amont (17) de ce troisième conduit (15).

6. Dispositif selon l'une des revendications 2 à 5, caractérisé en ce que les premier (8), second (13) et quatrième (22) volets sont pivotants.

7. Dispositif selon l'une des revendications 2 à 6, caractérisé en ce que le premier volet (8) est apte à prendre l'une au moins des quatre positions suivantes :
- une position « fermée» dans laquelle il interdit l'écoulement d'air froid vers la sortie pieds (9), tout en autorisant l'écoulement d'air chaud issu de l'échangeur de chaleur (16) vers cette sortie de pieds (9) ;
- une position "ouverte" dans laquelle il interdit l'écoulement d'air chaud vers la sortie pieds (9), tout en autoril'écoulement d'air froid vers cette sortie pieds (9);
- une position dite "intermédiaire centrale" dans laquelle il obstrue partiellement l'extrémité aval (7) du premier conduit (4) et l'extrémité aval pieds (19) du troisième conduit (15), autorisant ainsi l'évacuation d'un mélange d'air chaud et d'air froid dit "mitigé" vers la sortie pieds (9); et
- une position dite "intermédiaire un quart" dans laquelle il obstrue sensiblement un quart de l'extrémité aval du premier conduit et trois-quart de l'extrémité aval pieds (19) du troisième conduit (15), autorisant ainsi l'évacuation d'un mélange d'air chaud et d'air froid dit "mitigé chaud" vers la sortie pieds (9), et
en ce que le second volet (13) est apte à prendre l'une au moins des quatre positions suivantes :
- une position "fermée" dans laquelle il interdit l'écoulement d'air froid vers la sortie aération (14), tout en autorisant l'écoulement d'air chaud issu de l'échangeur de chaleur (16) vers cette sortie aération (14);
- une position "ouverte" dans laquelle il interdit l'écoulement d'air chaud vers la sortie aération (16), tout en autorisant l'écoulement d'air froid vers cette sortie aération (14);
- une position "intermédiaire centrale" dans laquelle il obstrue partiellement l'extrémité aval (7) du premier conduit (4) et l'extrémité aval aération (20) du troisième conduit (15), autorisant ainsi l'évacuation d'un mélange d'air chaud et d'air froid dit "mitigé" vers la sortie aération (14); et
- une position dite "intermédiaire trois-quart" dans laquelle il obstrue sensiblement trois-quart de l'extrémité aval (12) du second conduit (10) et un quart de l'extrémité aval aération (20) du troisième conduit (15), autorisant ainsi l'évacuation d'un mélange d'air chaud et d'air froid dit "mitigé froid" vers la sortie aération (14).

8. Dispositif selon l'une des revendications 2 et 7, caractérisé en ce que le quatrième volet (22) est apte à prendre l'une au moins des trois positions suivantes :
- une position dite "droite" dans laquelle il force l'évacuation, par son extrémité aval pieds (19), de l'intégralité de l'air chaud issu de l'échangeur de chaleur (16) vers la sortie pieds (9);
- une position dite "gauche" dans laquelle il force l'évacuation, par son extrémité aval aération (20), de l'intégralité de l'air chaud issu de l'échangeur de chaleur (16) vers la sortie aération (14); et
- une position dite "intermédiaire centrale" dans laquelle il autorise l'évacuation de l'air chaud issu de l'échangeur de chaleur (16) vers les sorties pieds (9) et aération (14), le volume d'air chaud évacué vers chaque sortie étant sensiblement le même.

9. Dispositif selon l'une des revendications 1 à 8, caractérisé en ce que le troisième volet (18) est apte à prendre au moins l'une de deux positions parmi une position "fermée" et une position "ouverte" dans lesquelles il interdit ou autorise l'accès de l'air à l'échangeur de chaleur (16), respectivement.

10. Dispositif selon la revendication 9, caractérisé en ce que les moyens de commande (1) sont agencés pour amener les volets (8,13,18,22) dans l'une au moins des positions suivantes :
- une première position dans laquelle le premier volet (8) est en position fermée, le second volet (13) est en position ouverte, et le troisième volet (18) est en position fermée, ce qui permet la circulation d'air froid vers la sortie aération (14);
- une seconde position dans laquelle le premier volet (8) est en position fermée, le second volet (13) est en position intermédiaire centrale, le troisième volet (18) est en position ouverte, et le quatrième volet (22) est en position gauche, ce qui permet la circulation d'air mélangé chaud/froid dit "mitigé" vers la sortie aération (14);
- une troisième position dans laquelle les premier (8) et second (13) volets sont en position fermée, le troisième volet (18) est en position ouverte, et le quatrième volet (22) est en position gauche, ce qui permet la circulation d'air chaud du troisième conduit (15) vers la sortie aération (14);
- une quatrième position dans laquelle le premier volet (8) est en position ouverte, les second (13) et troisième (18) volets sont en position fermée, ce qui permet la circulation d'air froid vers la sortie pieds (9);
- une cinquième position dans laquelle le premier volet (8) est en position intermédiaire centrale, le second volet (13) est en position fermée, le troisième volet (18) est en position ouverte, et le quatrième volet (22) est en position droite, ce qui permet la circulation d'air mélangé chaud/froid vers la sortie pieds (9);
- une sixième position dans laquelle les premier (8) et second (13) volet sont en position fermée, le troisième volet (18) est en position ouverte, et le quatrième volet (22) est en position droite, ce qui permet la circulation d'air chaud du troisième conduit (15) vers la sortie pieds (9); et
- une septième position dans laquelle les premier (8) et second (13) volets sont dans les positions respectives dites "intermédiaire un quart" et "intermédiaire trois-quart", le troisième volet (18) est en position ouverte, et le quatrième volet (22) est en position centrale, ce qui permet la circulation d'air mélangé chaud/froid de températures respectives dites "mitigé chaud" et "mitigé froid" vers les sorties pieds (9) et aération (14), respectivement.

## Patentansprüche

1. Heiz-, Belüftungs- und/oder Klimaanlage, insbesondere für ein Kraftfahrzeug, vom Typ, umfassend ein Gehäuse (2), welches einen Wärmetauscher (16) aufweist und mit einem Eintritt (6) versehen ist, der durch eine Motorventilatorgruppe mit Luft versorgt wird, wobei das Gehäuse (2) Fußaustritte (9) und Belüftungsaustritte (14) mit jeweils durch eine erste Klappe (8) und eine zweite Klappe (13) gesteuertem Zugang, wobei das Gehäuse (2) in drei Kanäle unterteilt ist, gekennzeichnet durch einen ersten Kanal (4), der ein erstes flußaufwärts liegendes Ende (5) aufweist, welches auf dem Niveau des Eintrittes (6) des Gehäuses (2) mündet, sowie ein flußabwärts liegendes Ende (7), welches in durch die darin enthaltene erste Klappe (8) gesteuerter Weise mit dem Fußaustritt (9) in Verbindung steht, einen zweiten Kanal (10), welcher ein flußaufwärts liegendes Ende (11) aufweist, welches auf dem Niveau des Eintrittes (6) des Gehäuses 2 mündet, sowie ein flußabwärts liegendes Ende (12), welches in einer durch darin enthaltenen zweiten Klappe (13) gesteuerten Weise mit den Belüftungsaustritt (14) in Verbindung steht, und einen dritten Kanal 15, der den Wärmetauscher (16) in einer mittleren Zone enthält und einerseits flußaufwärts liegend des Wärmetauschers ein flußaufwärts liegendes Ende (17) aufweist, welches in durch eine dritte Klappe (18) gesteuerter Weise mit dem Eintritt (6) des Gehäuses (2) in Verbindung steht sowie andererseits flußabwärts liegend des Wärmetauschers (16) ein flußabwärts liegendes Ende (19), auch Fußende genannt, gesteuert durch die erste Klappe (8), ausschließlich mit den Fußaustritten (9) in Verbindung stehend, sowie ein flußabwärts liegendes Ende, welches auch Belüftungsende genannt wird, gesteuert durch die zweite Klappe (13), ausschließlich mit den Belüftungsaustritten in Verbindung stehend; wobei eine Steuereinrichtung (1) vorgesehen ist, die selektiv auf die Klappen (8, 13, 18, 22) einwirken kann um diese in gewählte Positionen zu bringen.

2. Anlage nach Anspruch 1, dadurch gekennzeichnet, daß sie zwischen dem Wärmetauscher (16) und den zwei flußabwärts liegenden Enden "Füße und Belüftung" (19, 20) des dritten Kanals (15) eine vierte Klappe (22) umfaßt, die vorgesehen ist unter Steuerung der Steuereinrichtung (1) die Anteile an aus dem Wärmetauscher (16) austretender warmer Luft einzustellen und auf die Fußaustritte (9) und die Belüftungsaustritte (14) zu verteilen.

3. Anlage nach einem der Ansprüche 1 und 2, dadurch gekennzeichnet, daß sie zumindest eine Entfrostungsmündung aufweist, und das zumindest ein Fußaustritt (9) in zwei Abschnitte unterteilt ist, von denen einer die Fußbelüftungsmündungen und der andere die Entfrostungsmündungen versorgt.

4. Anlage nach Anspruch 3, dadurch gekennzeichnet, daß das flußaufwärts liegende Ende (17) des dritten Kanals (15) eine generell konusstumpfartige Form aufweist, um die Verteilung der aus der Motorventilatorgruppe (GMV) austretenden Luft über die gesamte Frontfläche (23) des Wärmetauschers (16) zu unterstützen.

5. Anlage nach einem der Ansprüche 3 und 4, dadurch gekennzeichnet, daß die flußabwärts liegenden Enden "Füße" (19) und "Belüftung" (20) des dritten Kanals (15) jeweils im wesentlichen senkrecht mit Bezug auf das flußaufwärts liegende Ende (17) des dritten Kanals (15) angeordnet sind.

6. Anlage nach einem der Ansprüche 2 bis 5, dadurch gekennzeichnet, daß die ersten (8), die zweiten (13) und vierten (22) Klappen schwenkbar sind.

7. Anlage nach einem der Ansprüche 2 bis 6, dadurch gekennzeichnet, daß die erste Klappe (8) in der Lage ist, zumindest eine der vier folgenden Positionen einzunehmen:
- eine "geschlossene" Position, in welcher sie die Strömung von Frischluft hin zu den Fußaustritten (9) verhindert, während eine Warmluftströmung ausgehend von dem Wärmetauscher (16) hin zu dem Fußaustritt (9) ermöglicht ist;
- eine "offene" Position, in welcher sie die Warmluftströmung hin zu dem Fußaustritt (9) ermöglicht, wobei die Frischluftströmung hin zu dem Fußaustritt (9) ermöglicht ist;
- eine sogenannte mittlere Zwischenstellung, in welcher sie teilweise das flußabwärts liegende Ende (7) des ersten Kanals (4) und das flußabwärts liegende Fußende (19) des dritten Kanals (15) sperrt, so daß die Evakuierung einer Warmluft/Kaltluft Mischung, auch "Mischluft" genannt, hin zu dem Fußaustritt (9) ermöglicht; und
- eine sogenannte Einviertel-Zwischenstellung, in welcher sie im wesentlichen ein viertel des flußabwärts liegenden Endes des ersten Kanals und drei viertel des flußabwärts liegenden Fußendes (19) des dritten Kanals (15) sperrt, so daß eine Evakuierung einer Mischung aus Warmluft und Kaltluft, auch "warme Mischluft" genannt hin zu dem Fußaustritt (9) ermöglicht ist, und
daß die zweite Klappe (13) in der Lage ist, zumindest eine der folgenden vier Positionen einzunehmen:
- eine "geschlossene" Position, in welcher sie eine Kaltluftströmung hin zu dem Belüftungsaustritt (14) verhindert, wobei eine Warmluftströmung, ausgehend von dem Wärmetauscher (16) hin zu dem Belüftungsaustritt (14) ermöglicht ist;
- eine "offene" Position, in welcher sie die Warmluftströmung hin zu dem Belüftungsaustritt (16) verhindert, wobei eine Frischluftströmung hin zu dem Belüftungsaustritt (14) ermöglicht ist;
- eine mittlere Zwischenposition, in welcher sie teilweise das flußabwärts liegende Ende (7) des ersten Kanals (4) und das flußabwärts liegende Belüftungsende (20) des dritten Kanals (15) sperrt, so daß die Evakuierung einer Mischung aus Warmluft und Kaltluft, auch "Mischluft" genannt, hin zu dem Belüftungsaustritt (14) ermöglicht ist; und
- eine sogenannte Dreiviertel-Zwischenposition, in welcher sie im wesentlichen drei viertel des flußabwärts liegenden Endes (12) des zweiten Kanals und ein viertel des flußabwärts liegenden Belüftungsendes (20) des dritten Kanals (15) sperrt, so daß eine Evakuierung einer Mischung aus Warmluft und Kaltluft, auch kalte Mischluft hin zu dem Belüftungsaustritt (14) ermöglicht ist.

8. Anlage nach einem der Ansprüche 2 und 7, dadurch gekennzeichnet, daß die vierte Klappe (22) in der Lage ist, zumindest eine der drei folgenden Positionen einzunehmen:
- eine "rechts" genannte Position, in welcher sie die Evakuierung der Gesamtheit der von dem Wärmetauscher (16) austretenden Warmluft über das flußabwärts liegende Fußende (19) hin zu dem Fußaustritt (9) veranlaßt;
- eine "links" genannte Position, in welcher sie die Evakuierung der Gesamtheit der von dem Wärmetauscher (16) austretenden Warmluft über das flußabwärts liegende Belüftungsende (20) hin zu dem Belüftungsaustritt (14) veranlaßt;
- eine Mittel-Zwischenstellung genannte Position, in welcher sie die Evakuierung der von dem Wärmetauscher (16) ausgehenden Warmluft hin zu den Fußaustritten (9) und den Belüftungsaustritten (14) ermöglicht, wobei das Volumen an zu jedem Austritt evakuierter Warmluft im wesentlichen gleich ist.

9. Anlage nach einem der Ansprüche 1 bis 8, dadurch gekennzeichnet, daß die dritte Klappe (18) in der Lage ist, zumindest eine von zwei Positionen einzunehmen unter einer "geschlossenen" Position und einer "offenen" Position, in welchen sie den Zugang von Luft zu dem Wärmetauscher (16) verhindert bzw. erlaubt.

10. Anlage nach Anspruch 9, dadurch gekennzeichnet, daß die Steuereinrichtung (1) ausgebildet ist, um die Klappen (8, 13, 18, 22) in zumindest eine der folgenden Positionen zu bringen:
- eine erste Position, in welcher die erste Klappe (8) in geschlossener Position, die zweite Klappe (13) in offener Position und die dritte Klappe (18) in geschlossener Position vorliegen, wodurch es ermöglicht ist, Frischluft hin zu dem Belüftungsaustritt (14) strömen zu lassen;
- eine zweite Position, in welcher die erste Klappe (8) in geschlossener Position, die zweite Klappe (13) in mittlerer Zwischenposition, die dritte Klappe (18) in offener Position und die vierte Klappe (22) in linker Position vorliegen, wodurch es ermöglicht ist, ein Warm/Kaltluftgemisch, "Mischluft" genannt, hin zu dem Belüftungsaustritt (14) strömen zu lassen;
- eine dritte Position, in welcher die erste (8) und zweite (13) Klappen in geschlossener Position, die dritte Klappe (18) in offener Position und die vierte Klappe (22) in linker Position vorliegen, wodurch es ermöglicht ist, daß Warmluft des dritten Kanals (15) hin zu dem Belüftungsaustritt (14) strömen kann;
- eine vierte Position, in welcher die erste Klappe (8) in offener Position, die zweiten und dritten Klappen (13, 18) in geschlossener Position vorliegen, wodurch es ermöglicht ist, daß Frischluft hin zu dem Fußaustritt (9) strömen kann;
- eine fünfte Position, in welcher die erste Klappe (8) in mittlerer Zwischenposition, die zweite Klappe (13) in geschlossener Position, die dritte Klappe (18) in offener Position und die vierte Klappe (22) in rechter Position vorliegen, wodurch es ermöglicht ist, daß ein Warm/Kaltluftgemisch hin zu dem Fußaustritt (9) strömen kann;
- eine sechste Position, in welcher die erste und zweite Klappe (8, 13) in geschlossener Position, die dritte Klappe (18) in offener Position und die vierte Klappe (22) in rechter Position vorliegen, wodurch es ermöglicht ist, daß Warmluft von dem dritten Kanal (15) hin zu dem Fußaustritt (9) strömen kann; und
- eine siebte Position, in welcher die ersten und zweiten Klappen (8, 13) in jeweils sogenannter Einviertel-Zwischenposition und Dreiviertel-Zwischenposition und die dritte Klappe (18) in offener Position und die vierte Klappe (22) in Mittelposition vorliegen, wodurch es ermöglicht ist, daß ein Warm/Kaltluftgemisch von jeweiligen Warmmischluft- und Kaltmischluftternperaturen hin zu dem Fußaustritt (9) bzw. dem Belüftungsaustritt (14) strömen kann.

## Claims

1. Heating, ventilating and/or air conditioning apparatus, in particular for a motor vehicle, of the type comprising a casing (2) containing a heat exchanger (16) and having an inlet (6) supplied with air by a motorised fan unit, the said casing (2) has footwarming outlets (9) and ventilating outlets (14), access to which is controlled by a first valve (8) and a second valve (13) respectively, the said casing (2) is divided into three ducts, characterised by a first duct (4) having an upstream end (5) open in the region of the inlet (6) of the said casing, and a downstream end (7) which is in communication, under the control of the first valve (8) which is contained in it, with the footwarming outlet (9), a second duct (10) having an upstream end (11) which is open in the region of the inlet (6) of the said casing (2) and a downstream end (12) in communication with the ventilating outlet (14) under the control of the second valve (13), which is contained in it, and a third duct (15) containing the heat exchanger (16) in a central zone and having, firstly, upstream of the said heat exchanger, an upstream end (17) which is in communication with the inlet (6) of the said casing (2) under the control of a third valve (18), and secondly, downstream of the said heat exchanger (16), a so-called "footwarming" downstream end (19) controlled by the first valve (8) and in communication exclusively with the footwarming outlets (9), together with a so-called "ventilating" downstream end controlled by the second valve (13) and in exclusive communication with the "ventilating" outlets; and control means (1) adapted to act selectively on the valves (8, 13, 18, 22) to put them in selected positions.

2. Apparatus according to Claim 1, characterised in that it includes, between the heat exchanger (16) and the two downstream ends of the third duct (15), namely the footwarming end (19) and ventilating end (20), a fourth valve (22) which is adapted to adjust, on orders from the control means (1), the proportion of the hot air delivered from the heat exchanger (16) to be distributed between the footwarming outlet (9) and the ventilating outlet (14).

3. Apparatus according to Claim 1 or Claim 2, characterised in that it includes at least one de-icing vent, and in that at least one footwarming outlet (9) is divided into two parts, one of which supplies the footwarming vents while the other one supplies the de-icing vents.

4. Apparatus according to Claim 3, characterised in that the upstream end (17) of the third duct (15) is generally frusto-conical in form so as to assist distribution of the air delivered by the motorised fan unit (GMV) over the whole of the front face (23) of the heat exchanger (16).

5. Apparatus according to Claim 3 or Claim 4, characterised in that the footwarming downstream end (19) and the ventilating downstream end (20) of the third duct (15) are each disposed substantially at right angles to the upstream end (17) of the said third duct (15).

6. Apparatus according to one of Claims 2 to 5, characterised in that the first valve (8), the second valve (13) and the fourth valve (22) are mounted for pivoting movement.

7. Apparatus according to one of Claims 2 to 6, characterised in that the first valve (8) is adapted to assume at least one of the following four positions:
- a "closed" position in which it prevents flow of cold air to the footwarming outlet (9) while enabling hot air from the heat exchanger (16) to flow to the said footwarming outlet (9);
- an "open" position in which it prevents flow of hot air to the footwarming outlet (9) while enabling cold air to flow to the said footwarming outlet (9);
- a so-called "central intermediate" position in which it partly obstructs the downstream end (7) of the first duct (4) and the footwarming downstream end (19) of the third duct (15), thereby enabling a so-called "mitigated" mixture of hot and cold air to be evacuated to the footwarming outlet (9); and
- a so-called "quarter intermediate" position in which it obstructs substantially one quarter of the downstream end of the first duct and three-quarters of the downstream footwarming end (19) of the third duct (15), thereby enabling a so-called "hot mitigated" mixture of hot and cold air to be evacuated to the footwarming outlet (9), and
in that the second valve (13) is adapted to assume at least one of the following four positions:
- a "closed" position in which it prevents flow of cold air to the ventilating outlet (14) while enabling hot air delivered from the heat exchanger (16) to-flow to the said ventilating outlet (14);
- an "open" position in which it prevents flow of hot air to the ventilating outlet (16) while enabling cold air to flow to the said ventilating outlet (14);
- a "central intermediate" position in which it partially obstructs the downstream end (7) of the first duct (4) and the ventilating downstream end (20) of the third duct (15), thereby enabling a so-called "mitigated" mixture of hot and cold air to be evacuated to the ventilating outlet (14); and
- a so-called "three-quarter intermediate" position in which it obstructs substantially three quarters of the downstream end (12) of the second duct (10) and one quarter of the ventilating downstream end (20) of the third duct (15), thereby enabling a so-called "cold mitigated" mixture of hot air and cold air to be evacuated to the ventilating outlet (14).

8. Apparatus according to Claim 2 or Claim 7, characterised in that the fourth valve (22) is adapted to assume at least one of the three following positions:
- a so-called "right hand" position in which it forces all of the hot air delivered from the heat exchanger (16) to be evacuated through its footwarming downstream end (19) to the footwarming outlet (9) ;
- a so-called "left hand" position in which it forces all of the hot air delivered from the heat exchanger (16) to be delivered through its ventilating downstream end (20) to the ventilating outlet (14); and
- a so-called "central intermediate" position in which it enables hot air delivered from the heat exchanger (16) to be evacuated to the footwarming outlet (9) and ventilating outlet (14), the volume of hot air evacuated to each outlet being substantially the same.

9. Apparatus according to one of Claims 1 to 8, characterised in that the third valve (18) is adapted to assume at least one of two positions selected from a "closed" position and a "open" position, in which positions it prevents or permits access of air to the heat exchanger (16), respectively.

10. Apparatus according to Claim 9, characterised in that the control means (1) are so arranged as to put the valves (8, 13, 18, 22) in at least one of the following positions:
- a first position in which the first valve (8) is in the closed position, the second valve (13) is in the open position, and the third valve (18) is in the closed position, which enables cold air to flow to the ventilating outlet (14);
- a second position in which the first valve (8) is in the closed position, the second valve (13) is in the central intermediate position, the third valve (18) is in the open position, and the fourth valve (22) is in the left hand position, thereby permitting a so-called "mitigated" mixture of hot and cold air to flow to the ventilating outlet (14);
- a third position in which the first valve (8) and the second valve (13) are in the closed position, the third valve (18) is in the open position, and the fourth valve (22) is in the left hand position, thereby permitting hot air to flow from the third duct (15) to the ventilating outlet (14);
- a fourth position in which the first valve (8) is in the open position while the second valve (13) and third valve (18) are in the closed position, which permits cold air to flow to the footwarming outlet (9);
- a fifth position in which the first valve (8) is in the central intermediate position, the second valve (13) is in the closed position, the third valve (18) is in the open position, and the fourth valve (22) is in the right hand position, which enables a mixture of hot and cold air to flow to the footwarming outlet (9);
- a sixth position in which the first valve (8) and second valve (13) are in the closed position, the third valve (18) is in the open position, and the fourth valve (22) is in the right hand position, which enables hot air to flow from the third duct (15) to the footwarming outlet (9); and
- a seventh position in which the first valve (8) and second valve (13) are in the so-called "quarter intermediate" position and "three-quarter intermediate" position respectively, the third valve (18) is in the open position, and the fourth valve (22) is in the central position, so as to permit so-called "hot mitigated" and "cold mitigated" mixtures of hot and cold air at respective temperatures to flow to the footwarming outlet (9) and ventilating outlet (14) respectively.
